# FASCICULE DE BREVET EUROPEEN

(11) **EP 3 007 944 B1**
(45) Date de publication et mention de la délivrance du brevet: **01.05.2019**
(21) Numéro de dépôt: 14736653.8
(22) Date de dépôt: 13.06.2014
(51) Int. Cl.: B60S 1/48, B60S 1/50, B60S 1/52

(54) **PROCÉDÉ DE LAVAGE D'UNE VITRE D'UN VÉHICULE**
VERFAHREN ZUM WASCHEN DER FENSTERSCHEIBE EINES FAHRZEUGES
METHOD FOR WASHING A WINDOW OF A VEHICLE

(30) Priorité: 14.06.2013 FR 1355547
(43) Date de publication de la demande: 20.04.2016
(73) Titulaire: Valeo Systèmes d'Essuyage, 78322 Le Mesnil Saint Denis (FR)
(72) Inventeur: NEGRE, Pierre-Emmanuel, F-75014 Paris (FR); KOLANOWSKI, Grégory, F-43300 Siaugues-saint-romain (FR); GRASSO, Giuseppe, F-63340 Le Breuil sur Couze (FR); TREBOUET, Marcel, F-78450 Chavenay (FR)
(74) Mandataire: Callu-Danseux, Violaine
(86) Numéro de dépôt international: PCT/EP2014/062372
(87) Numéro de publication internationale: WO 2014/198892

(56) Documents cités:
- EP-A2- 1 118 516
- WO-A1-03/020559
- DE-A1- 10 236 886
- DE-A1-102008 052 063
- US-A1- 2013 032 169

## Description

Le secteur technique de la présente invention est celui des procédés de lavage d'une vitre d'un véhicule, notamment automobile en utilisant un système d'essuyage et de lavage de ladite vitre. Un tel système est plus particulièrement destiné à être installé sur un pare-brise du véhicule.

Les automobiles sont couramment équipées d'installation d'essuyage et de système de lavage pour assurer un essuyage et un lavage du pare-brise et éviter que la vision qu'a le conducteur de son environnement soit perturbée. Une telle installation comprend généralement deux balais d'essuyage qui raclent la surface extérieure du pare-brise de manière à évacuer l'eau présente sur cette surface.

Dans le but de laver le pare-brise, notamment en absence de pluie, de tels systèmes sont équipés d'un réservoir contenant un liquide nettoyant, dit premier liquide, d'un système de canalisation reliant le réservoir à des orifices par lesquels le premier liquide peut être éjecté sur le pare-brise, et d'une pompe apte à faire circuler le premier liquide dans le système de canalisation jusqu'à ce qu'il soit expulsé par les orifices sur le pare-brise.

Dans le but d'améliorer la qualité du nettoyage, notamment en cas de salissure importante du pare-brise, et/ou d'ajouter d'autres fonctions au système de nettoyage comme par exemple le dégivrage du pare-brise, il est connu de prévoir un deuxième réservoir contenant un liquide actif, dit deuxième liquide, ayant des propriétés de nettoyage supérieures et/ou des propriétés de dégivrage. De tels liquides actifs sont plus onéreux que les liquides nettoyants classiques.

Les deux réservoirs peuvent posséder chacun leur pompe mais sont reliés au même système de canalisation emmenant le premier et le deuxième liquides jusqu'aux orifices par lesquels ils sont éjectés sur le pare-brise. Ainsi, lorsque l'on veut passer de la projection d'un des liquides sur le pare-brise à la projection de l'autre des liquides, on désactive la pompe qui fonctionnait et on active l'autre pompe.

De tels changements de pompe entrainent du gaspillage de l'un ou l'autre des liquides qui ne sont pas utilisés au bon moment où qui le sont en trop grande quantité. DE-A-102008052063 montre un procédé selon le préambule de la revendication 1.

L'invention vise à améliorer la situation et concerne à cet effet un procédé de lavage d'un pare-brise de véhicule automobile par utilisation d'un dispositif de lavage comprenant :
- au moins un réservoir contenant un fluide,
- un système de canalisation reliant le ou chaque réservoir à des orifices par lesquels sont éjectés le fluide sur le pare-brise,
- un système de pompe destiné à faire circuler le fluide dans le système de canalisation jusqu'à éjection par les orifices précités, et
- au moins un balai d'essuyage apte à se déplacer sur le pare-brise,
   procédé caractérisé en ce qu'il comprend au moins l'une des étapes suivantes :
   a) entraînement du balai d'essuyage depuis une position basse jusqu'à une position haute, et activation du système de pompe de sorte que du premier fluide soit éjecté sur le pare-brise uniquement entre le moment où le balai est dans sa position basse et le moment où le balai est dans une position intermédiaire, ou uniquement entre le moment où le balai est dans une position intermédiaire et le moment où le balai est dans sa position haute, ou uniquement entre le moment où le balai est dans une position intermédiaire et le moment où le balai est dans une autre position intermédiaire, et
   b) entraînement du balai d'essuyage depuis sa position haute jusqu'à sa position basse, et activation du système de pompe de sorte que du premier fluide soit éjecté sur le pare-brise uniquement entre le moment où le balai est dans sa position haute et le moment où le balai est dans une position intermédiaire, ou uniquement entre le moment où le balai est dans une position intermédiaire et le moment où le balai est dans sa position basse ou uniquement entre le moment où le balai est dans une position intermédiaire et le moment où le balai est dans une autre position intermédiaire.

L'invention est particulièrement avantageuse car elle permet d'optimiser la consommation en liquide du dispositif de lavage. Le balai d'essuyage peut être déplacé selon une phase de balayage montante (de sa position basse à sa position haute) et/ou selon une phase de balayage descendante (de sa position haute à sa position basse). Selon l'invention, du liquide est éjecté sur le pare-brise durant une partie de la phase de balayage montante et/ou une partie de la phase de balayage descendante du balai. Au contraire, dans la technique antérieure, du liquide était éjecté sur le pare-brise pendant toute la durée des phases de balayage.

Dans la présente demande, on entend par position intermédiaire du balai, une position comprise entre sa position basse et sa position haute. Cette position intermédiaire peut être franchie par le balai alors que celui-ci provient de la position basse (c'est-à-dire lors d'une phase de balayage montante) ou qu'il provient de la position haute (c'est-à-dire lors d'une phase de balayage descendante).

Selon un aspect de l'invention, le procédé de lavage comprend les étapes a) et b) précitées, l'étape b) étant réalisée juste après l'étape a).

Selon un exemple de réalisation de l'invention, une des étapes a) et b) est répétée après l'étape b).

Le dispositif de lavage peut comprendre :
- un premier réservoir contenant un premier fluide et un deuxième réservoir comprenant un deuxième fluide,
- ledit système de canalisation reliant le premier réservoir et le deuxième réservoir aux orifices par lesquels sont éjectés le premier fluide et/ou le deuxième fluide sur le pare-brise, et
- le système de pompe étant destiné à faire circuler le premier fluide et/ou le deuxième fluide dans le système de canalisation jusqu'à éjection par les orifices précités.

Avantageusement, le système de canalisation contenant du premier fluide, le procédé comprend, avant les étapes a) et/ou b) précitées, les étapes :
i) d'activation du système de pompe de manière à faire circuler du deuxième fluide dans le système de canalisation de façon à purger le système de canalisation (5) du premier fluide, et
j) désactivation du système de pompe au moment où le deuxième fluide arrive au niveau des orifices.

L'invention est particulièrement avantageuse car elle permet de s'assurer que le système de canalisation est rempli en deuxième fluide et que ce dernier sera éjecté sur le pare-brise du véhicule dès la prochaine activation du système de pompe, sans que du premier fluide ne soit éjecté avant ou avec le deuxième fluide. L'invention permet ainsi d'éviter d'éjecter du liquide non désiré et donc de gaspiller du liquide. L'invention permet en outre d'améliorer l'efficacité du nettoyage du pare-brise.

Selon un aspect de l'invention, le balai d'essuyage est mis en mouvement depuis sa position basse, dès que l'étape i) commence.

Selon un exemple de réalisation de l'invention, l'étape j) est effectuée lorsque le balai d'essuyage a atteint une position intermédiaire prédéterminée, dans une phase de balayage montante. On peut ainsi optimiser la répartition du premier fluide sur le pare-brise en programmant la position intermédiaire du balai d'essuyage à partir de laquelle on arrête d'éjecter le premier fluide sur le pare-brise. Ceci évite d'éjecter du premier fluide lorsque le balai est dans sa position haute, ce fluide étant susceptible de ne pas atteindre le pare-brise dans cette position du balai, et limite ainsi le gaspillage du premier fluide.

Avantageusement, le procédé de l'invention comprend, avant l'étape i), une étape préliminaire dans laquelle le système de pompe est activé pour faire circuler du premier fluide dans le système de canalisation. On peut ainsi savoir exactement la quantité de premier fluide présent dans le système de canalisation à la suite de cette étape. Elle vise notamment à remplir le système de canalisation qui pourrait être vide, par exemple du fait de la non utilisation du dispositif depuis un certain temps et l'évaporation du fluide contenu dans le système de canalisation.

Selon un aspect de l'invention, le système de pompe est à l'état désactivé et le balai d'essuyage est en position basse pendant une durée de pause T1 prédéterminée, entre l'étape préliminaire et l'étape i).

Selon un exemple de réalisation de l'invention, le procédé comprend, après l'étape j), une étape k) dans laquelle le système de pompe est activé de manière à faire circuler du premier fluide dans le système de canalisation de façon à purger le système de canalisation du deuxième fluide, et une étape l) dans laquelle le système de pompe est désactivé au moment où le premier fluide arrive au niveau des orifices. On effectue ici une deuxième purge qui permet de vider le système de canalisation du deuxième fluide et de le remplir du premier fluide sans pour autant faire sortir du premier fluide des orifices d'éjection. Le procédé de l'invention permet ainsi de continuer d'utiliser du deuxième fluide en le poussant avec le premier fluide de sorte qu'au moment où on bascule l'utilisation au premier fluide, il soit déjà à la sortie des orifices. Le deuxième fluide ne sera alors pas gaspillé et le premier fluide pourra être éjecté au moment voulu et à l'endroit voulu. Le procédé selon l'invention comprend ainsi des étapes successives de purge du système de canalisation.

Avantageusement, le procédé comprend une étape m) de mise en mouvement du balai d'essuyage depuis sa position haute, avant que l'étape k) commence.

Selon un aspect de l'invention, l'étape k) est réalisée à partir du moment où le balai d'essuyage est dans une première position intermédiaire prédéterminée et jusqu'au moment où le balai d'essuyage est dans une deuxième position intermédiaire prédéterminée, dans une même phase de balayage descendante. On prévoit ainsi exactement la durée pendant laquelle on souhaite éjecter le deuxième fluide sur le pare-brise et la zone du pare-brise sur laquelle on souhaite le déposer.

Selon un exemple de réalisation de l'invention, le système de pompe est à l'état désactivé et le balai d'essuyage est en position basse pendant une durée T2 prédéterminée de pause, entre les étapes j) et a). Grâce à cette pause, le deuxième fluide présent sur le pare-brise va pouvoir agir sur les saletés ou sur le givre avant que le balai d'essuyage ne se remette en mouvement.

Selon l'invention, le procédé comprend après l'étape b), une étape c) d'entraînement du balai d'essuyage depuis sa position basse jusqu'à sa position haute, et depuis sa position haute jusqu'à sa position basse.

Selon l'invention, le procédé comprend, après l'étape c), une étape d) de vérification de l'état de propreté du pare-brise, au moins une partie des étapes précitées du procédé de lavage étant répétées en fonction du résultat obtenu à l'étape d). Ainsi, en fonction de l'état de propreté du pare-brise, il est possible de répéter toutes les étapes du procédé de lavage ou une partie de ces étapes, par exemple les étapes a), b) et/ou k).

Selon un exemple de réalisation de l'invention, le premier fluide est un fluide de lavage et le deuxième fluide est un fluide antigivre et/ou anti-moustique, ou le premier fluide est un fluide antigivre et/ou anti-moustique et le deuxième fluide est un fluide de lavage. Le procédé de l'invention permet ainsi d'utiliser le fluide désiré au bon moment, sans gaspillage, en particulier concernant le fluide antigivre et/ou anti-moustique.

Avantageusement, le système de pompe comprend deux pompes indépendantes, une première pompe associée au premier réservoir et destinée à faire circuler le premier fluide et une deuxième pompe associée au deuxième réservoir et destinée à faire circuler le deuxième fluide.

Selon un aspect de l'invention, les orifices sont situés sur le balai d'essuyage et/ou sur le capot d'un véhicule.

Selon un exemple de réalisation, le ou chaque balai d'essuyage projette du liquide vers le haut du balai. Le ou chaque balai d'essuyage est par exemple monorampe. Les orifices précités d'éjection de fluide peuvent ainsi déboucher ver le haut du ou des balais.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue schématique d'un dispositif de lavage d'un pare-brise de véhicule automobile ;
- la figure 2 est un graphique illustrant différentes étapes d'un mode de réalisation du procédé de lavage de l'invention.
- les figures 3 à 13 sont des vues schématiques du pare-brise et des balais d'essuyage du dispositif de lavage de la figure 1, à différentes étapes du procédé de lavage illustré à la figure 2.

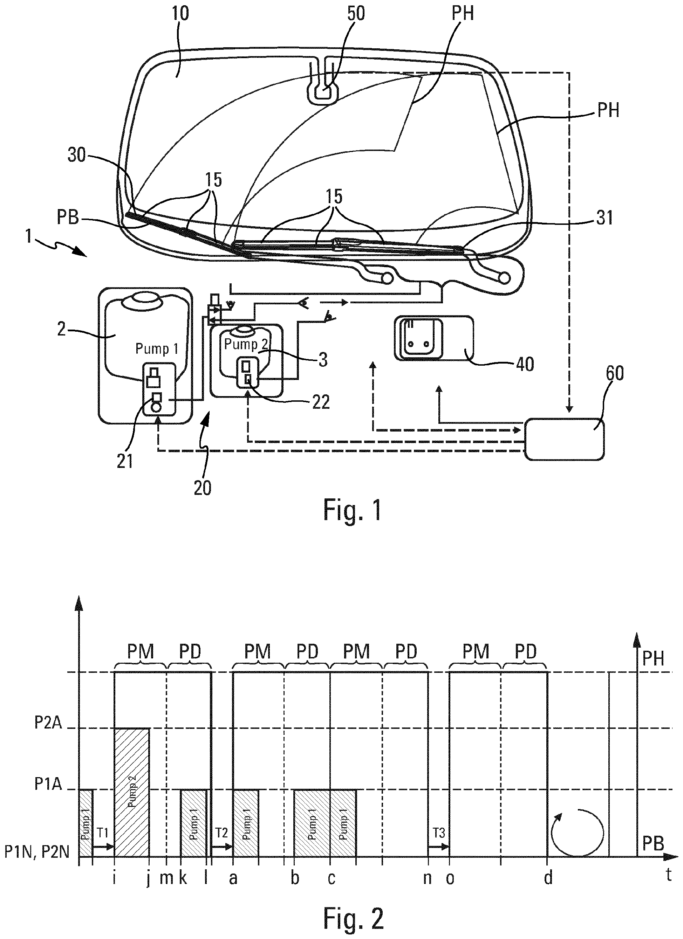

Le procédé de lavage de l'invention utilise un dispositif de lavage 1 appliqué sur un pare-brise 10 de véhicule automobile tel qu'illustré à la figure 1. Un tel dispositif de lavage comprend un premier réservoir 2 contenant un premier fluide et un deuxième réservoir 3 comprenant un deuxième fluide. Le premier fluide est par exemple un liquide nettoyant. Le deuxième fluide est notamment un liquide antigivre et/ou anti-moustique, c'est-à-dire un liquide actif permettant le dégivrage du pare-brise et/ou un nettoyage particulier du pare-brise 10.

Le dispositif de lavage 1 comprend également un système de canalisation 5 reliant le premier réservoir 2 et le deuxième réservoir 3 à des orifices 15 par lesquels sont éjectés du premier fluide et/ou du deuxième fluide sur le pare-brise 10. Il comprend en outre un système de pompe 20 destiné à faire circuler du premier fluide et/ou du deuxième fluide dans le système de canalisation 5 jusqu'à éjection par les orifices 15. Le système de pompe 20 comprend ici deux pompes 21, 22 indépendantes. Une première pompe 21 est associée au premier réservoir 2 et est destinée à faire circuler du premier fluide dans le système de canalisation 5 et une deuxième pompe 22 est associée au deuxième réservoir 3 et est destinée à faire circuler du deuxième fluide dans le système de canalisation 5.

Le dispositif de lavage 1 comprend au moins un balai d'essuyage 30 monté sur un bras 31 et apte à se déplacer sur le pare-brise 10 entre une position basse PB et une position haute PH. Le dispositif de lavage 1 de la figure 1 comprend deux balais d'essuyage 30. Les orifices 15 précités sont par exemple situés sur les balais d'essuyage 30. Ils peuvent également être situés sur le bras 31. Les orifices 15 sont ici disposés de manière à projeter du premier fluide et/ou du deuxième fluide vers le haut des balais d'essuyage 30, c'est-à-dire vers le haut du pare-brise 10.

Le balai d'essuyage 30 est par exemple un balai comprenant au moins une rampe destinée à projeter du liquide vers le haut du balai ou en direction de la position haute PH.

Le dispositif de lavage 1 comprend également un moteur 40 destiné à entrainer les balais d'essuyage 30 entre leurs positions basses et leurs positions hautes respectives. Le dispositif de lavage 1 comprend en outre au moins un capteur 50. Il est situé ici sur une partie haute du pare-brise, au centre de celui-ci. Il est notamment situé au niveau d'une zone du pare-brise 10 balayée par un seul des deux balais d'essuyage 30.

Le dispositif de lavage 1 comprend de plus un boitier électronique 60 capable d'analyser les données issues du capteur 50 et de commander le moteur 40 d'entraînement des balais d'essuyage 30 et l'activation du système de pompe 20, les première et deuxième pompes 21, 22 pouvant être commandées de manière indépendante. Le capteur 50 est par exemple un capteur de pluie, un capteur d'opacité du pare-brise et/ou un capteur de lumière.

La figure 2 illustre un mode de réalisation du procédé de lavage selon l'invention, et représente un graphe dans lequel sont représentés en abscisse, le temps t, et en ordonnées, à la fois l'état des pompes activée(s)/désactivée(s) à gauche sur le dessin (P1A/P1N = première pompe activée/désactivée et P2A/P2N = deuxième pompe activée/désactivée), et la position des balais d'essuyage (PB = position basse et PH = position haute). Les indices PM et PD désignent en outre des phases de balayage montante et descendante, respectivement, des balais d'essuyage 30, c'est-à-dire les phases où les balais sont en mouvement. Ce procédé de lavage est de préférence mis en oeuvre lorsque le véhicule équipé du dispositif de lavage est à l'arrêt.

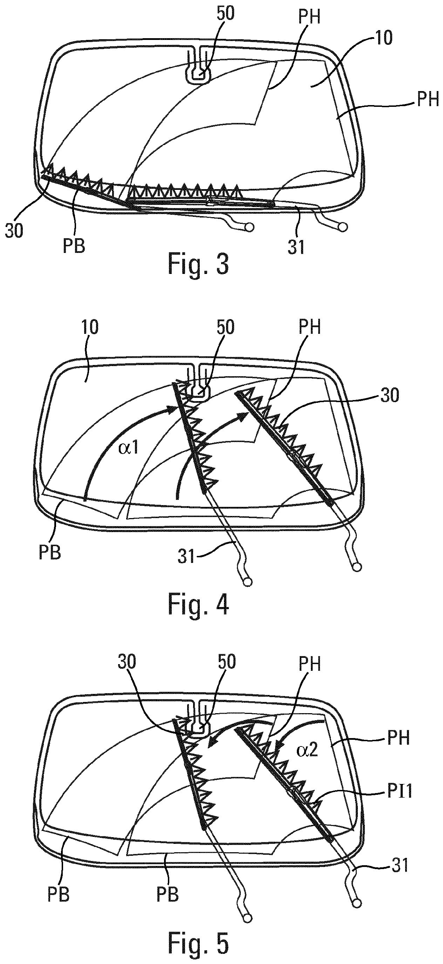

Comme cela est visible aux figures 2 et 3, le procédé comprend une étape préliminaire dans laquelle le système de pompe 20 est activé pour faire circuler du premier fluide dans le système de canalisation 5. On active pour cela la première pompe 21. Cette étape permet de remplir le système de canalisation 5 en premier fluide. La pompe 21 est désactivée dès que du premier fluide commence à être éjecté sur le pare-brise 10 ou au moment où du premier fluide parvient au niveau des orifices 15.

Le procédé comprend ensuite une étape de pause d'une durée T1, pendant laquelle le système de pompe est désactivé et les balais d'essuyage 30 sont au repos.

Le procédé comprend ensuite une étape i) d'activation du système de pompe 20 de manière à faire circuler du deuxième fluide dans le système de canalisation 5 et à purger le système de canalisation 5 du premier fluide (figures 2 et 4). On comprend ici que c'est la deuxième pompe 22 qui est activée pour remplir le système de canalisation 5 en deuxième fluide et chasser le premier fluide contenu dans le système de canalisation, jusqu'à son éjection sur le pare-brise 10. Le procédé comprend en outre une étape j) de désactivation de la pompe 22 au moment où le deuxième fluide arrive au niveau des orifices 15. Le système de canalisation 5 est alors rempli en deuxième fluide, du deuxième fluide étant situé dans le système de canalisation 5 jusqu'au niveau des orifices 15 de sorte que le système 5 soit totalement purgé du premier fluide. Plusieurs paramètres peuvent être pris en considération pour déterminer le moment où la purge est terminée, comme par exemple le débit de la pompe 22, la viscosité des fluides, la température ambiante, la contenance du système de canalisation et/ou la longueur de ce dernier.

L'activation de la pompe 22 à l'étape i) est réalisée simultanément à la mise en mouvement des balais d'essuyage 30, qui étaient chacun en position de repos ou basse PB, comme cela est visible en figure 3.

L'étape j) (désactivation de la pompe 22) est effectuée lorsque les balais d'essuyage 30 ont atteint des positions intermédiaires prédéterminées, dans une phase de balayage montante. Dans ces positions intermédiaires représentées en figure 4, les balais d'essuyage ont chacun été entrainés (en rotation autour de leurs axes d'articulation) selon un angle a1, mesuré depuis les positions basses PB, qui est inférieur à l'angle maximal de rotation de chacun des balais lorsqu'ils sont entraînés de leurs positions basses PB à leurs positions hautes PH. Le réglage de l'angle a1 permet de régler avec précision la zone sur laquelle on désire déposer du premier fluide et la quantité déposée de premier fluide. Lorsque les balais d'essuyage ont chacun été entrainés selon l'angle α1, ils se trouvent par exemple à 10° de leurs positions hautes respectives. L'angle a1 peut être spécifique à chacun des balais d'essuyage 30 du dispositif de lavage, en particulier si les angles maximaux précités (angles entre les positions basses et hautes) sont différents d'un balai d'essuyage à l'autre du même dispositif de lavage.

Bien que la pompe 22 soit désactivée, les balais d'essuyage 30 poursuivent leurs courses jusqu'à leurs positions hautes PH. Ils sont ensuite entraînés depuis leurs positions hautes jusqu'à leurs positions basses PB (étape m)), comme illustré sur les figures 2, 5 et 6. Pendant cette phase de balayage descendante, le procédé de l'invention comprend une étape k) dans laquelle le système de pompe 20 est activé de manière à faire circuler du premier fluide dans le système de canalisation 5 de façon à purger le système de canalisation du deuxième fluide. On comprend donc ici que c'est la première pompe 21 qui est activée pour remplir le système de canalisation 5 avec du premier fluide et éjecter de la sorte le deuxième fluide contenu dans le système de canalisation 5 sur le pare-brise.

Le procédé comprend également une étape l) dans laquelle la pompe 21 est désactivée au moment où du premier fluide arrive au niveau des orifices 15. De la même manière qu'expliqué précédemment, le deuxième fluide est ainsi chassé du système de canalisation 5 qui ne comprend donc plus que du premier fluide, qui s'étend dans le système de canalisation 5 jusqu'au niveau des orifices d'éjection 15.

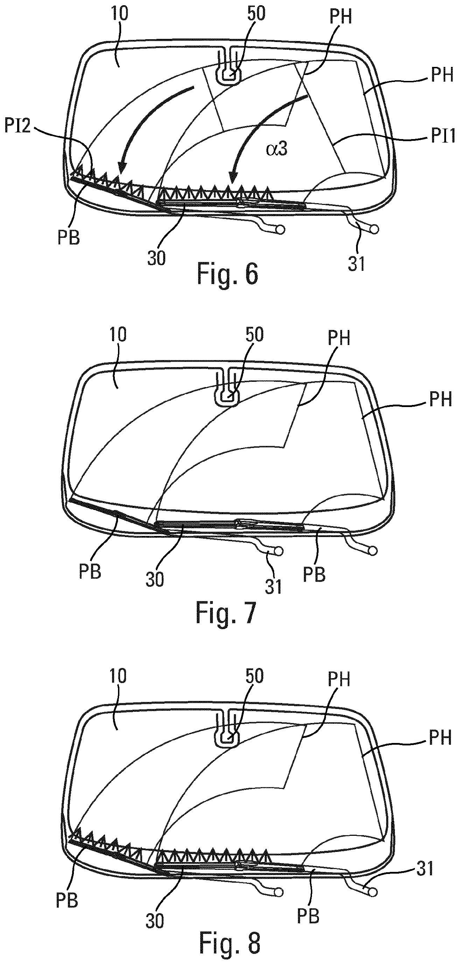

On remarque sur les figures 2, 5 et 6 que l'étape k) est réalisée à partir du moment où les balais d'essuyage 30 sont dans des premières positions intermédiaires PI1 prédéterminées et jusqu'au moment où les balais d'essuyage sont dans des deuxièmes positions intermédiaires PI2 prédéterminées, dans une même phase de balayage descendante. Dans les premières positions intermédiaires représentées en figure 5, les balais d'essuyage 30 ont chacun été entrainés selon un angle a2 mesuré depuis leurs positions hautes PH et, dans les deuxièmes positions intermédiaires représentées en figure 6, les balais d'essuyage 30 ont chacun été entrainés selon un angle a3 mesuré depuis leurs positions hautes PH. a3 est supérieur à a2 (par rapport aux positions hautes) du fait que les balais parviennent à ces positions dans une même phase de balayage descendante et que les balais atteignent les premières positions intermédiaires aux angles a2 avant les deuxièmes positions intermédiaires aux angles a3. On peut remarquer sur la figure 2 notamment que l'étape l) (désactivation de la pompe 21) intervient alors que les balais d'essuyage n'ont pas encore atteint leurs positions basses PB. Comme expliqué dans ce qui précède, le réglage des angles a2 et a3 permet de régler avec précision la zone sur laquelle on désire déposer du deuxième fluide et la quantité déposée de deuxième fluide. De plus, les angles a2 et a3 propres à un balai d'essuyage peuvent être différents des angles a2 et a3 propres à l'autre balai du dispositif de lavage, comme expliqué précédemment. A titre d'exemple, l'angle a2 est égal à 10° et lorsque les balais d'essuyages ont été entrainés selon l'angle a3, ils se trouvent par exemple à 10° de leurs positions basses.

Les balais d'essuyage parviennent ensuite à leurs positions basses PB et sont laissés dans cette position pendant une durée de pause T2 prédéterminée, comme illustré sur les figures 2 et 7. Le système de pompe 20 est à l'état désactivé pendant la durée T2. Ainsi, le deuxième fluide est laissé sur le pare-brise 10 pendant cette durée de pause T2 de sorte qu'il ait le temps d'agir, notamment sur la saleté et/ou le givre. Cette durée T2 est par exemple de quelques secondes.

Comme illustré sur les figures 2 et 8 à 10 le procédé de lavage de l'invention comprend, après la pause précitée, une étape a) d'entraînement des balais d'essuyage depuis leurs positions basses PB jusqu'à leurs positions hautes PH, et d'activation du système de pompe 20, ici la première pompe 21, pour éjecter du premier fluide par les orifices 15, entre le moment où les balais d'essuyage sont dans leurs positions basses PB et le moment où les balais d'essuyage sont dans des positions intermédiaires prédéterminées PI4. Dans ces positions PI4, les balais d'essuyage ont chacun été entrainés sur le pare-brise selon un angle a4, mesuré depuis leurs positions basses PB et inférieurs aux angles maximaux précités (angles entre les positions basses et hautes). Le système de pompe est alors désactivé au moment où les balais atteignent les positions intermédiaires prédéterminées PI4. Lorsque les balais d'essuyage ont chacun été entrainés selon l'angle a4, ils se trouvent par exemple à 10° de leurs positions hautes.

Le procédé comprend également, après l'étape a), une étape b) d'entraînement des balais d'essuyage depuis leurs positions hautes PH jusqu'à leurs positions basses, et d'activation du système de pompe 20, ici la première pompe 21, pour éjecter du premier fluide par les orifices 15, entre le moment où les balais d'essuyage sont dans des positions intermédiaires prédéterminées PI5 et le moment où les balais sont dans leurs positions basses PB. Dans les positions intermédiaires prédéterminées PI5, les balais d'essuyage ont chacun été entrainés sur le pare-brise selon un angle a5, mesuré depuis leurs positions hautes PH, et inférieur aux angles maximaux précités (angles entre les positions basses et hautes). L'angle a5 est par exemple sensiblement égal à 10°.

Après avoir atteint leurs positions hautes PH, et lors d'une phase successive de balayage descendante des balais, le procédé de lavage peut également comprendre une étape ultérieure c) d'entraînement des balais d'essuyage 30 depuis leurs positions basses PB jusqu'à leurs positions hautes PH, et depuis leurs positions hautes PH jusqu'à leurs positions basses PH. Durant cette étape, le procédé de lavage comprend une sous-étape (figure 2) d'activation du système de pompe 20, ici la première pompe 21, pour éjecter du premier fluide par les orifices 15, entre le moment où les balais d'essuyage sont dans leurs positions basses PB et le moment où ils sont dans des positions intermédiaires prédéterminées. Le système de pompe est à l'état désactivé à partir du moment où les balais d'essuyage atteignent ces positions intermédiaires et également pendant que les balais d'essuyage passent de leurs positions hautes à leurs positions basses. On remarque aussi, dans l'exemple illustré, que l'étape a) est répétée une fois après l'étape b).

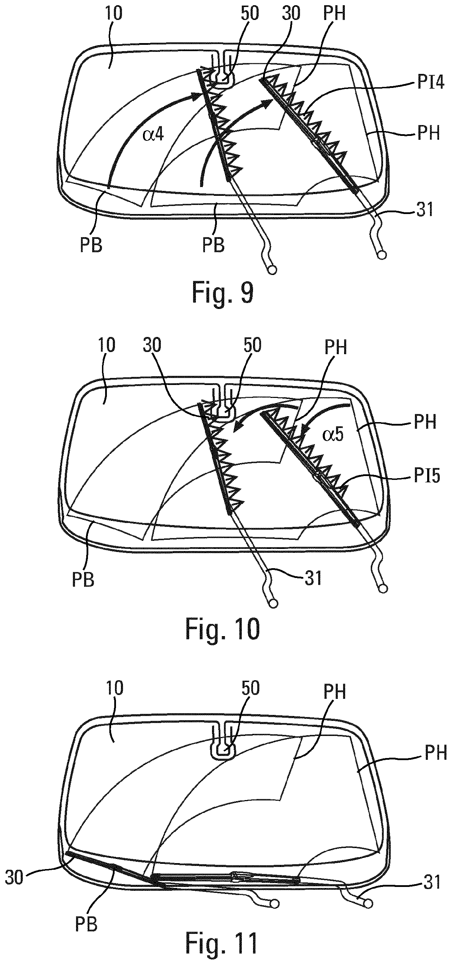

Comme illustré à la figure 11, le procédé comprend en outre, après la fin de l'étape c), une étape n) dans laquelle le système de pompe est désactivé et les balais d'essuyage sont dans leurs positions basses PB pendant une durée de pause T3 prédéterminée. La durée de T3 est par exemple de quelques secondes.

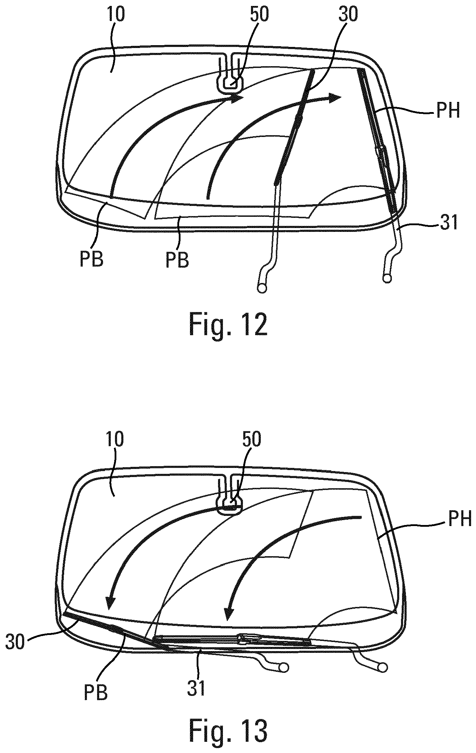

Le procédé de lavage comprend ensuite, comme illustré sur les figure 12 et 13, après l'étape n), une étape o) d'entraînement des balais d'essuyage 30 depuis leurs positions basses jusqu'à leurs positions hautes, et depuis leurs positions hautes jusqu'à leurs positions basses. Le système de pompe est désactivé pendant cette étape. Cette étape permet notamment d'essuyer le pare-brise pour enlever les résidus de fluides et/ou de saletés qui pourraient encore se trouver sur le pare-brise.

Le procédé de lavage comprend, enfin après l'étape o), une étape d) de vérification de l'état de propreté du pare-brise, par l'intermédiaire du ou des capteurs 50, au moins une partie des étapes précitées du procédé de lavage peuvent être répétée en fonction du résultat obtenu à l'étape d).

De manière générale, les paramètres a1, a2, a3, a4, a5, T1, T2 et/ou T3 sont déterminés de façon à optimiser la consommation en fluides du dispositif, ainsi que la durée du cycle ou procédé de lavage, et en conséquence d'améliorer l'efficacité du nettoyage.

## Revendications

1. Procédé de lavage d'un pare-brise (10) de véhicule automobile par utilisation d'un dispositif de lavage (1) comprenant :
- au moins un réservoir (2, 3) contenant un fluide,
- un système de canalisation (5) reliant le ou chaque réservoir à des orifices (15) par lesquels sont éjectés le fluide sur le pare-brise (10),
- un système de pompe (20) destiné à faire circuler le fluide dans le système de canalisation (5) jusqu'à éjection par les orifices (15) précités, et
- au moins un balai d'essuyage (30) apte à se déplacer sur le pare-brise (10), le procédé comprenant au moins l'une des étapes suivantes :
a) entraînement du balai d'essuyage (30) depuis une position basse (PB) jusqu'à une position haute (PH), et activation du système de pompe (20) de sorte que du fluide soit éjecté sur le pare-brise (10) uniquement entre le moment où le balai (30) est dans sa position basse (PB) et le moment où le balai (30) est dans une position intermédiaire, ou uniquement entre le moment où le balai (30) est dans une position intermédiaire et le moment où le balai (30) est dans sa position haute (PH), ou uniquement entre le moment où le balai (30) est dans une position intermédiaire et le moment où le balai (30) est dans une autre position intermédiaire, et
b) entraînement du balai d'essuyage (30) depuis sa position haute (PH) jusqu'à sa position basse (PB), et activation du système de pompe (20) de sorte que du fluide soit éjecté sur le pare-brise (10) uniquement entre le moment où le balai (30) est dans sa position haute (PH) et le moment où le balai (30) est dans une position intermédiaire, ou uniquement entre le moment où le balai (30) est dans une position intermédiaire et le moment où le balai (30) est dans sa position basse (PB) ou uniquement entre le moment où le balai (30) est dans une position intermédiaire et le moment où le balai (30) est dans une autre position intermédiaire, le procédé étant **caractérisé en ce qu'**il comprend après l'une des étapes a) ou b) :
- une étape c) d'entraînement du balai d'essuyage depuis sa position basse jusqu'à sa position haute, et depuis sa position haute jusqu'à sa position basse, le système de pompe étant désactivé pendant cette étape et après l'étape c),
- une étape d) de vérification de l'état de propreté du pare-brise, par l'intermédiaire d'un ou plusieurs capteurs (50), au moins une partie des étapes précitées du procédé de lavage étant répétées en fonction du résultat obtenu à l'étape d).

2. Procédé de lavage selon la revendication 1, **caractérisé en ce qu'**il comprend les étapes a) et b) précitées, l'étape b) étant réalisée juste après l'étape a).

3. Procédé de lavage selon la revendication 2, **caractérisé en ce qu'**au moins une des étapes a) et b) est répétée après l'étape b).

4. Procédé de lavage selon l'une des revendications précédentes, **caractérisé en ce que** le dispositif de lavage comprend :
- un premier réservoir (2) contenant un premier fluide et un deuxième réservoir (3) comprenant un deuxième fluide,
- ledit système de canalisation (5) reliant le premier réservoir (2) et le deuxième réservoir (3) aux orifices (15) par lesquels sont éjectés le premier fluide et/ou le deuxième fluide sur le pare-brise (10), et
- le système de pompe (20) étant destiné à faire circuler le premier fluide et/ou le deuxième fluide dans le système de canalisation (5) jusqu'à éjection par les orifices (15) précités.

5. Procédé selon la revendication 4, **caractérisé en ce que**, le système de canalisation contient du premier fluide, le procédé comprend, avant les étapes a) et/ou b) précitées, les étapes :
i) d'activation du système de pompe (20) de manière à faire circuler du deuxième fluide dans le système de canalisation (5) de façon à purger le système de canalisation (5) du premier fluide, et
j) désactivation du système de pompe (20) au moment où le deuxième fluide arrive au niveau des orifices (15).

6. Procédé de lavage selon la revendication 5, **caractérisé en ce que** le balai d'essuyage (30) est mis en mouvement depuis sa position basse (PB), dès que l'étape i) commence.

7. Procédé de lavage selon la revendication 6, **caractérisé en ce que** l'étape j) est effectuée lorsque le balai d'essuyage (30) a atteint une position intermédiaire prédéterminée, dans une phase de balayage montante.

8. Procédé de lavage selon l'une des revendications 5 à 7, **caractérisé en ce qu'**il comprend, avant l'étape i), une étape préliminaire dans laquelle le système de pompe (20) est activé pour faire circuler du premier fluide dans le système de canalisation (5).

9. Procédé de lavage selon l'une quelconque des revendications 5 à 8, **caractérisé en ce que** le système de pompe (20) est à l'état désactivé et le balai d'essuyage (30) est en position basse (PB) pendant une durée de pause T1 prédéterminée, entre l'étape préliminaire et l'étape i).

10. Procédé de lavage selon l'une quelconque des revendications 5 à 9, **caractérisé en ce qu'**il comprend, après l'étape j), une étape k) dans laquelle le système de pompe (20) est activé de manière à faire circuler du premier fluide dans le système de canalisation (5) de façon à purger le système de canalisation (5) du deuxième fluide, et une étape l) dans laquelle le système de pompe (5) est désactivé au moment où le premier fluide arrive au niveau des orifices (15).

11. Procédé de lavage selon la revendication 10, **caractérisé en ce qu'**il comprend une étape m) de mise en mouvement du balai d'essuyage (30) depuis sa position haute (PH), avant que l'étape k) commence.

12. Procédé de lavage selon la revendication 11, **caractérisé en ce que** l'étape k) est réalisée à partir du moment où le balai d'essuyage (30) est dans une première position intermédiaire prédéterminée et jusqu'au moment où le balai d'essuyage (30) est dans une deuxième position intermédiaire prédéterminée, dans une même phase de balayage descendante.

13. Procédé de lavage selon l'une des revendications 10 à 12, **caractérisé en ce que** le système de pompe est à l'état désactivé et le balai d'essuyage est en position basse pendant une durée T2 prédéterminée de pause, entre les étapes l) et a).

14. Procédé selon l'une quelconque des revendications 4 à 13, **caractérisé en ce que** le premier fluide est un fluide de lavage et le deuxième fluide est un fluide antigivre et/ou anti-moustique, ou le premier fluide est un fluide antigivre et/ou anti-moustique et le deuxième fluide est un fluide de lavage.

15. Procédé de lavage selon l'une des revendications 4 à 14, **caractérisé en ce que** le système de pompe comprend deux pompes indépendantes, une première pompe associée au premier réservoir et destinée à faire circuler le premier fluide et une deuxième pompe associée au deuxième réservoir et destinée à faire circuler le deuxième fluide.

16. Procédé de lavage selon l'une quelconque des revendications précédentes, **caractérisé en ce que** le ou chaque balai d'essuyage (30) projette du liquide vers le haut du balai.

## Patentansprüche

1. Verfahren zum Waschen einer Windschutzscheibe (10) eines Kraftfahrzeugs unter Verwendung einer Waschvorrichtung (1), die Folgendes umfasst:
- wenigstens einen Vorratsbehälter (2, 3), der ein Fluid enthält,
- ein Leitungssystem (5), das den oder jeden Vorratsbehälter mit Mündungen (15) verbindet, durch die das Fluid auf die Windschutzscheibe (10) ausgestoßen wird,
- ein Pumpsystem (20), das dazu bestimmt ist, das Fluid in dem Leitungssystem (5) bis zum Ausstoßen durch die oben genannten Mündungen (15) umzuwälzen, und
- wenigstens eine Wischbürste (30), die die Windschutzscheibe (10) überstreichen kann, wobei das Verfahren wenigstens einen der folgenden Schritte umfasst:
a) Antreiben der Wischbürste (30) von einer unteren Position (PB) in eine obere Position (PH) und Betätigen des Pumpsystems (20) in der Weise, dass das Fluid ausschließlich zwischen dem Zeitpunkt, zu dem die Bürste (30) in ihrer unteren Position (PB) ist, und dem Zeitpunkt, zu dem die Bürste (30) in einer Zwischenposition ist, oder ausschließlich zwischen dem Zeitpunkt, zu dem die Bürste (30) in einer Zwischenposition ist, und dem Zeitpunkt, zu dem die Bürste (30) in ihrer oberen Position (PH) ist, oder ausschließlich zwischen dem Zeitpunkt, zu dem die Bürste (30) in einer Zwischenposition ist, und dem Zeitpunkt, zu dem die Bürste (30) in einer anderen Zwischenposition ist, auf die Windschutzscheibe (10) ausgestoßen wird, und
b) Antreiben der Wischbürste (30) von ihrer oberen Position (PH) in ihre untere Position (PB) und Betätigen des Pumpsystems (20) in der Weise, dass das Fluid ausschließlich zwischen dem Zeitpunkt, zu dem die Bürste (30) in ihrer oberen Position (PH) ist, und dem Zeitpunkt, zu dem die Bürste (30) in einer Zwischenposition ist, oder ausschließlich zwischen dem Zeitpunkt, zu dem die Bürste (30) in einer Zwischenposition ist, und dem Zeitpunkt, zu dem die Bürste (30) in ihrer unteren Position (PB) ist, oder ausschließlich zwischen dem Zeitpunkt, zu dem die Bürste (30) in einer Zwischenposition ist, und dem Zeitpunkt, zu dem die Bürste (30) in einer anderen Zwischenposition ist, auf die Windschutzscheibe (10) ausgestoßen wird,
wobei das Verfahren **dadurch gekennzeichnet ist, dass** es nach einem der Schritte a) oder b) Folgendes umfasst:
- einen Schritt c) des Antreibens der Wischbürste von ihrer unteren Position in ihre obere Position und von ihrer oberen Position in ihre untere Position, wobei das Pumpsystem während dieses Schrittes und nach dem Schritt c) deaktiviert ist,
- einen Schritt d) des Prüfens des Sauberkeitszustands der Windschutzscheibe mittels eines oder mehrerer Sensoren (50), wobei wenigstens ein Teil der oben genannten Schritte des Waschverfahrens in Abhängigkeit von dem im Schritt d) erhaltenen Ergebnis wiederholt wird.

2. Waschverfahren nach Anspruch 1, **dadurch gekennzeichnet, dass** es die oben genannten Schritte a) und b) umfasst, wobei der Schritt b) direkt nach dem Schritt a) ausgeführt wird.

3. Waschverfahren nach Anspruch 2, **dadurch gekennzeichnet, dass** wenigstens einer der Schritte a) und b) nach dem Schritt b) wiederholt wird.

4. Waschverfahren nach einem der vorhergehenden Ansprüche, **dadurch gekennzeichnet, dass** die Waschvorrichtung Folgendes umfasst:
- einen ersten Vorratsbehälter (2), der ein erstes Fluid enthält, und einen zweiten Vorratsbehälter (3), der ein zweites Fluid enthält,
- das Leitungssystem (5), das den ersten Vorratsbehälter (2) und den zweiten Vorratsbehälter (3) mit den Mündungen (15) verbindet, durch die das erste Fluid und/oder das zweite Fluid auf die Windschutzscheibe (10) ausgestoßen werden, und
- das Pumpsystem (20), das dazu bestimmt ist, das erste Fluid und/oder das zweite Fluid in dem Leitungssystem (5) bis zum Ausstoßen durch die oben erwähnten Mündungen (15) umzuwälzen.

5. Verfahren nach Anspruch 4, **dadurch gekennzeichnet, dass** das Leitungssystem das erste Fluid enthält und das Verfahren vor den oben genannten Schritten a) und/oder b) die folgenden Schritte umfasst:
i) Aktivieren des Pumpsystems (20) in der Weise, dass das zweite Fluid in dem Leitungssystem (5) umgewälzt wird, derart, dass das erste Fluid aus dem Leitungssystem (5) gespült wird, und
j) Deaktivieren des Pumpsystems (20) zu dem Zeitpunkt, zu dem das zweite Fluid auf Höhe der Mündungen (15) ankommt.

6. Waschverfahren nach Anspruch 5, **dadurch gekennzeichnet, dass** die Wischbürste (30) ausgehend von ihrer unteren Position (PB) in Bewegung gesetzt wird, sobald der Schritt i) beginnt.

7. Waschverfahren nach Anspruch 6, **dadurch gekennzeichnet, dass** der Schritt j) ausgeführt wird, wenn die Wischbürste (30) in einer aufsteigenden Überstreichphase eine vorgegebene Zwischenposition erreicht hat.

8. Waschverfahren nach einem der Ansprüche 5 bis 7, **dadurch gekennzeichnet, dass** es vor dem Schritt i) einen vorherigen Schritt umfasst, in dem das Pumpsystem (20) aktiviert wird, um das erste Fluid in dem Leitungssystem (5) umzuwälzen.

9. Waschverfahren nach einem der Ansprüche 5 bis 8, **dadurch gekennzeichnet, dass** das Pumpsystem (20) während einer vorgegebenen Pausendauer T1 zwischen dem vorherigen Schritt und dem Schritt i) in einem deaktivierten Zustand ist und die Wischbürste (30) in der unteren Position (PB) ist.

10. Waschverfahren nach einem der Ansprüche 5 bis 9, **dadurch gekennzeichnet, dass** es nach dem Schritt j) einen Schritt k) umfasst, in dem das Pumpsystem (20) aktiviert ist, derart, dass das erste Fluid in dem Leitungssystem (5) in der Weise umgewälzt wird, dass das zweite Fluid aus dem Leitungssystem (5) entleert wird, und einen Schritt l) umfasst, in dem das Pumpsystem (5) zu dem Zeitpunkt, zu dem das erste Fluid auf Höhe der Mündungen (15) ankommt, deaktiviert wird.

11. Waschverfahren nach Anspruch 10, **dadurch gekennzeichnet, dass** es einen Schritt m) des Versetzens in Bewegung der Wischbürste (30) von ihrer oberen Position (PH), bevor der Schritt k) beginnt, umfasst.

12. Waschverfahren nach Anspruch 11, **dadurch gekennzeichnet, dass** der Schritt k) ab dem Zeitpunkt, zu dem die Wischbürste (30) in einer vorgegebenen ersten Zwischenposition ist, und bis zu dem Zeitpunkt, zu dem die Wischbürste (30) in einer vorgegebenen zweiten Zwischenposition ist, in derselben absteigenden Überstreichphase ausgeführt wird.

13. Waschverfahren nach einem der Ansprüche 10 bis 12, **dadurch gekennzeichnet, dass** das Pumpsystem während einer vorgegebenen Pausendauer T2 zwischen den Schritten l) und a) im deaktivierten Zustand ist und die Wischbürste in der unteren Position ist.

14. Verfahren nach einem der Ansprüche 4 bis 13, **dadurch gekennzeichnet, dass** das erste Fluid ein Waschfluid ist und das zweite Fluid ein Enteisungsfluid und/oder Mückenentfernungsfluid ist oder dass das erste Fluid ein Enteisungsfluid und/oder ein Mückenentfernungsfluid ist und das zweite Fluid ein Waschfluid ist.

15. Waschverfahren nach einem der Ansprüche 4 bis 14, **dadurch gekennzeichnet, dass** das Pumpsystem zwei unabhängige Pumpen umfasst, wobei eine erste Pumpe dem ersten Vorratsbehälter zugeordnet ist und dazu bestimmt ist, das erste Fluid umzuwälzen, und eine zweite Pumpe dem zweiten Vorratsbehälter zugeordnet ist und dazu bestimmt ist, das zweite Fluid umzuwälzen.

16. Waschverfahren nach einem der vorhergehenden Ansprüche, **dadurch gekennzeichnet, dass** die oder jede Wischbürste (30) Flüssigkeit zur Oberseite der Bürste ausstößt.

## Claims

1. Method for washing a windscreen (10) of a motor vehicle by using a washing device (1) comprising:
- at least one reservoir (2, 3) containing a fluid,
- a system of pipes (5) connecting the or each reservoir to orifices (15) through which the fluid is ejected onto the windscreen (10),
- a pump system (20) designed to cause the fluid to flow in the system of pipes (5) until it is ejected through the aforesaid orifices (15), and
- at least one windscreen wiper (30) capable of moving over the windscreen (10), the method comprising at least one of the following steps:
a) entrainment of the windscreen wiper (30) from a low position (PB) to a high position (PH), and activation of the pump system (20) such that fluid is ejected onto the windscreen (10) only between the moment at which the wiper (30) is in its low position (PB) and the moment when the wiper (30) is in an intermediate position, or only between the moment when the wiper (30) is in an intermediate position and the moment when the wiper (30) is in its high position (PH), or only between the moment when the wiper (30) is in an intermediate position and the moment when the wiper (30) is in another intermediate position, and
b) entrainment of the windscreen wiper (30) from its high position (PH) to its low position (PB), and activation of the pump system (20) such that fluid is ejected onto the windscreen (10) only between the moment when the wiper (30) is in its high position (PH) and the moment when the wiper (30) is in an intermediate position, or only between the moment when the wiper (30) is in an intermediate position and the moment when the wiper (30) is in its low position (PB), or only between the moment when the wiper (30) is in an intermediate position and the moment when the wiper (30) is in another intermediate position,
the method being **characterized in that** it comprises, after step a) or step b):
- a step c) of entrainment of the windscreen wiper from its low position to its high position, and from its high position to its low position, the pump system being deactivated during this step, and after step c),
- a step d) of checking the cleanliness of the windscreen, by means of one or more sensors (50), at least some of the aforesaid steps in the washing method being repeated as a function of the result obtained in step d).

2. Washing method according to Claim 1, **characterized in that** it comprises the aforesaid steps a) and b), step b) being implemented just after step a).

3. Washing method according to Claim 2, **characterized in that** at least one of steps a) and b) is repeated after step b).

4. Washing method according to one of the preceding claims, **characterized in that** the washing device comprises:
- a first reservoir (2) containing a first fluid and a second reservoir (3) comprising a second fluid,
- said system of pipes (5) connecting the first reservoir (2) and the second reservoir (3) to the orifices (15) through which the first fluid and/or the second fluid is/are ejected onto the windscreen (10), and
- the pump system (20) being designed to cause the first fluid and/or the second fluid to flow in the system of pipes (5) until it/they is/are ejected through the aforesaid orifices (15).

5. Method according to Claim 4, **characterized in that** the system of pipes contains the first fluid, the method comprises, prior to the aforesaid steps a) and/or b), the steps:
i) of activation of the pump system (20) such as to cause the second fluid to flow in the system of pipes (5) so as to purge the system of pipes (5) of the first fluid, and
j) of deactivation of the pump system (20) at the moment when the second fluid arrives at the orifices (15) .

6. Washing method according to Claim 5, **characterized in that** the windscreen wiper (30) is moved from its low position (PB) as soon as step i) commences.

7. Washing method according to Claim 6, **characterized in that** step j) is implemented when the windscreen wiper (30) has reached a predetermined intermediate position, in a rising wiping phase.

8. Washing method according to one of Claims 5 to 7, **characterized in that**, prior to step i), it comprises a preliminary step in which the pump system (20) is activated in order to cause the first fluid to flow in the system of pipes (5).

9. Washing method according to any one of Claims 5 to 8, **characterized in that** the pump system (20) is in the deactivated state and the windscreen wiper (30) is in the low position (PB) during a predetermined pause period T1, between the preliminary step and step i).

10. Washing method according to any one of Claims 5 to 9, **characterized in that**, after step j), it comprises a step k) in which the pump system (20) is activated such as to cause the first fluid to flow in the system of pipes (5) so as to purge the system of pipes (5) of the second fluid, and a step 1) in which the pump system (5) is deactivated at the moment when the first fluid arrives at the orifices (15).

11. Washing method according to Claim 10, **characterized in that** it comprises a step m) of moving the windscreen wiper (30) from its high position (PH), prior to commencement of step k).

12. Washing method according to Claim 11, **characterized in that** step k) is implemented as of the moment when the windscreen wiper (30) is in a predetermined first intermediate position and until the moment when the windscreen wiper (30) is in a predetermined second intermediate position, in one and the same falling wiping phase.

13. Washing method according to one of Claims 10 to 12, **characterized in that** the pump system is in the deactivated state and the windscreen wiper is in the low position during a predetermined pause period T2, between steps 1) and a).

14. Method according to any one of Claims 4 to 13, **characterized in that** the first fluid is a washing fluid and the second fluid is a de-icing and/or insect-removal fluid, or the first fluid is a de-icing and/or insect-removal fluid and the second fluid is a washing fluid.

15. Washing method according to one of Claims 4 to 14, **characterized in that** the pump system comprises two separate pumps, a first pump associated with the first reservoir and designed to cause the first fluid to flow and a second pump associated with the second reservoir and designed to cause the second fluid to flow.

16. Washing method according to any one of the preceding claims, **characterized in that** the or each windscreen wiper (30) sprays liquid towards the top of the wiper.
